# EUROPEAN PATENT APPLICATION

(11) **EP 4 408 091 A1**
(43) Date of publication of application: **31.07.2024**
(21) Application number: 21957766.5
(22) Date of filing: 22.09.2021
(51) Int. Cl.: H04W 68/00, H04W 72/04

(54) **METHOD AND APPARATUS FOR DETERMINING INITIAL BANDWIDTH PART, AND STORAGE MEDIUM**

(71) Applicant: Beijing Xiaomi Mobile Software Co., Ltd., Beijing 100085 (CN)
(72) Inventor: MU, Qin, Beijing 100085 (CN); QIAO, Xuemei, Beijing 100085 (CN)
(74) Representative: Gunzelmann, Rainer
(86) International application number: PCT/CN2021/119711
(87) International publication number: WO 2023/044626

(57) **Abstract**

The present disclosure relates to a method and apparatus for determining an initial bandwidth part, and a storage medium. The method for determining an initial bandwidth part is applied to a terminal. The method comprises: determining an initial bandwidth part monitored in a resident cell, wherein the initial bandwidth part comprises a first initial bandwidth part or a second initial bandwidth part. By means of the present disclosure, a BWP that needs to be monitored is determined when there are multiple initial BWPs.

## Description

### TECHNICAL FIELD

The present disclosure relates to the field of communication technology, and particularly to a method and an apparatus for determining an initial bandwidth part (BWP), and a storage medium.

### BACKGROUND

In a long term evolution (LTE) 4G system, in order to support an Internet of Things (IoT) service, two main techniques, i.e., machine type communication (MTC) and narrow band Internet of Things (NB-IoT), are provided for low-rate high-latency scenarios such as meter reading and environment monitoring. Currently, NB-IoT may only support a maximum rate of several hundred kbits/sec, and MTC may only support a maximum rate of several Mbits/sec. With continuous development of IoT services, such as video surveillance, smart home, wearable devices, industrial sensing monitoring and other services, the services usually require a rate ranging from tens of M to 100Mbits/sec, and meanwhile they have a relatively high latency requirement. The MTC and the NB-IoT in the related art thus have difficulty satisfying the rate requirements. Therefore, a new terminal type is designed in 5G new radio (5G NR) to meet the requirements of a middle-level IoT device. In current 3GPP standardization, the new terminal type is referred to as a low capability terminal, also referred to as a Reduced capability UE (Redcap UE) or an NR-lite.

In the related art, an initial bandwidth part (BWP) is defined in the NR system, which is referred to as a first initial BWP Considering factors such as time division duplex (TDD) center frequency-alignment of the Redcap UE, an initial BWP specific to the Redcap UE is also defined in the related art, which is hereinafter referred to as a second initial BWP.

When a network device configures a plurality of initial BWPs for the Redcap UE, such as a first initial BWP and a second initial BWP, the terminal enters an inactive state or an idle state from a connected state, it is an urgent problem to be solved which initial BWP the terminal should monitor.

### SUMMARY

To overcome the problems existing in the related art, a method and an apparatus for determining an initial bandwidth part (BWP), and a storage medium are provided in the present disclosure.

According to a first aspect of embodiments of the present disclosure, a method for determining an initial BWP is provided, which is performed by a terminal. The method includes: determining an initial BWP to be monitored in a cell the terminal camping on, in which the initial BWP includes a first initial BWP or a second initial BWP.

In an implementation, determining the initial BWP to be monitored in the cell the terminal camping on includes: in response to a network device configuring the second initial BWP, determining the initial BWP to be monitored in the cell the terminal camping on is the second initial BWP, in which the second initial BWP is configured with one or more of a synchronization signal and PBCH block (SSB) and paging information.

In an implementation, determining the initial BWP to be monitored in the cell the terminal camping on includes: receiving first indication information from a network device; and determining the initial BWP to be monitored in the cell the terminal camping on based on the first indication information.

In an implementation, determining the initial BWP to be monitored in the cell the terminal camping on includes: determining the initial BWP to be monitored in the cell the terminal camping on based on a predefined rule.

In an implementation, the method further includes: determining an initial BWP to monitored in a target cell the terminal reselecting to and camping on, in which the initial BWP includes a first initial BWP or a second initial BWP.

In an implementation, determining the initial BWP to be monitored in the target cell the terminal reselecting to and camping on includes: acquiring a system information block (SIB) on the first initial BWP in the target reselection cell; and in response to the SIB indicating the target reselection cell is configured with the second initial BWP, determining the initial BWP to be monitored in the target cell the terminal reselecting to and camping on is the second initial BWP.

In an implementation, determining the initial BWP to be monitored in the target cell the terminal reselecting to and camping on includes: acquiring a system information block (SIB) on the first initial BWP in the target reselection cell; and in response to the SIB indicating the target reselection cell is not configured with the second initial BWP, determining the initial BWP to be monitored in the target cell the terminal reselecting to and camping on is the first initial BWP.

In an implementation, determining the initial BWP to be monitored in the target cell the terminal reselecting to and camping on includes: receiving second indication information from a network device; and determining the initial BWP to be monitored in the target cell the terminal reselecting to and camping on based on the second indication information.

In an implementation, determining the initial BWP to be monitored in the cell the terminal camping on includes: determining the initial BWP to be monitored in the cell the terminal camping on is the first initial BWP.

In an implementation, the method further includes: determining the initial BWP to be monitored in a target cell the terminal reselecting to and camping on is the first initial BWP.

In an implementation, the method further includes: performing a SSB measurement on the initial BWP to be monitored and/or receiving a paging message on the initial BWP to be monitored.

According to a second aspect of embodiments of the present disclosure, a method for determining an initial BWP is provided, which is performed by a network device. The method includes: sending first indication information, in which the first indication information indicates an initial BWP to be monitored in a cell a terminal camping on, and the initial BWP includes a first initial BWP or a second initial BWP.

In an implementation, the method further includes: sending second indication information, in which the second indication information indicates an initial BWP to be monitored in a target cell the terminal camping on.

According to a third aspect of embodiments of the present disclosure, an apparatus for determining an initial BWP is provided. The apparatus includes: a processing unit, configured to determine an initial BWP to be monitored in a cell a terminal camping on, in which the initial BWP includes a first initial BWP or a second initial BWP.

In an implementation, the processing unit is configured to determine the initial BWP to be monitored in the cell the terminal camping on is the second initial BWP, in which the second initial BWP is configured with one or more of a SSB and paging information.

In an implementation, the apparatus for determining the initial BWP further includes a receiving unit, configured to receive a first message sent by a network device; and the processing unit is configured to determine the initial BWP to be monitored in the cell the terminal camping on based on the first indication information.

In an implementation, the processing unit is configured to determine the initial BWP to be monitored in the cell the terminal camping on based on a predefined rule.

In an implementation, the processing unit is further configured to determine an initial BWP to be monitored in a target cell the terminal reselecting to and camping on, in which the initial BWP includes a first initial BWP or a second initial BWP.

In an implementation, the apparatus for determining the initial BWP further includes a receiving unit, configured to acquire a SIB on the first initial BWP in the target reselection cell; and in response to the SIB indicating the target reselection cell is configured with the second initial BWP, the processing unit is configured to determine the initial BWP to be monitored in the target cell the terminal reselecting to and camping on is the second initial BWP.

In an implementation, the apparatus for determining the initial BWP further includes a receiving unit, configured to acquire a SIB on the first initial BWP in the target reselection cell; and in response to the SIB indicating the target reselection cell is not configured with the second initial BWP, the processing unit is configured to determine the initial BWP to be monitored in the target cell the terminal reselecting to and camping on is the first initial BWP.

In an implementation, the apparatus for determining the initial BWP further includes a receiving unit, configured to receive a second message from a network device; and the processing unit is configured to determine the initial BWP to be monitored in the target cell the terminal reselecting to and camping on based on the second indication information.

In an implementation, the processing unit is configured to determine the initial BWP to be monitored in the cell the terminal camping on is the first initial BWP.

In an implementation, the processing unit is further configured to determine the initial BWP to be monitored in a target cell the terminal reselecting to and camping on is the first initial BWP.

In an implementation, the processing unit is further configured to perform a SSB measurement on the initial BWP to be monitored and/or receive a paging message on the initial BWP to be monitored.

According to a fourth aspect of embodiments of the present disclosure, an apparatus for determining an initial BWP is provided. The apparatus includes: a sending unit, configured to send first indication information, in which the first indication information indicates an initial BWP to be monitored in a cell a terminal camping on, and the initial BWP includes a first initial BWP or a second initial BWP.

In an implementation, the sending unit is further configured to send second indication information, in which the second indication information indicates an initial BWP to be monitored in a target cell the terminal camping on.

According to a fifth aspect of embodiments of the present disclosure, a device for determining an initial BWP is provided, which includes: a processor; and a memory for storing instructions executable by the processor. The processor is configured to perform the method for determining the initial BWP in the first aspect or in any one implementation of the first aspect.

According to a sixth aspect of embodiments of the present disclosure, a device for determining an initial BWP is provided, which includes: a processor; and a memory for storing instructions executable by the processor. The processor is configured to perform the method for determining the initial BWP in the second aspect or in any one implementation of the second aspect.

According to a sixth aspect of embodiments of the present disclosure, a storage medium storing instructions is provided. When the instructions in the storage medium are executed by a processor of a terminal, the terminal is caused to perform the method for determining the initial BWP in the first aspect or any one implementation of the first aspect.

According to a seventh aspect of embodiments of the present disclosure, a storage medium storing instructions is provided. When the instructions in the storage medium are executed by a processor of a network device, the network device is caused to perform the method for determining the initial BWP in the second aspect or any implementation of the second aspect.

The technical solution according to the embodiments of the present disclosure may include the following beneficial effect: the terminal determines the initial BWP to be monitored in the cell the terminal camping on is one of a first initial BWP or a second initial BWP when the terminal is configured with a plurality of initial BWPs, so as to determine a BWP that needs to be monitored by the Redcap UE for configuration with the plurality of initial BWPs.

It should be noted that, the details above and in the following are exemplary and illustrative, and do not constitute the limitation on the present disclosure.

### BRIEF DESCRIPTION OF THE DRAWINGS

The drawings herein are incorporated into the specification and constitute a part of the specification, show embodiments in conformity with the embodiments of the present disclosure, and explain the principle of the present disclosure together with the specification.
FIG. 1 is a diagram illustrating a wireless communication system according to an example embodiment.
FIG. 2 is a flowchart illustrating a method for determining an initial BWP according to an example embodiment.
FIG. 3 is a flowchart illustrating a method for determining an initial BWP according to an example embodiment.
FIG. 4 is a flowchart illustrating a method for determining an initial BWP according to an example embodiment.
FIG. 5 is a block diagram illustrating an apparatus for determining an initial BWP according to an example embodiment.
FIG. 6 is a block diagram illustrating an apparatus for determining an initial BWP according to an example embodiment.
FIG. 7 is a block diagram illustrating a device for determining an initial BWP according to an example embodiment.
FIG. 8 is a block diagram illustrating a device for determining an initial BWP according to an example embodiment.

### DETAILED DESCRIPTION

The example embodiments will be described in detail here, examples of which are shown in the accompanying drawings. When the following descriptions refer to the accompanying drawings, unless otherwise indicated, the same numbers in different drawings represent the same or similar elements. The implementations described in the following example embodiments do not represent all the implementations consistent with the present disclosure. Rather, they are merely examples of the apparatus and method consistent with some aspects of the present disclosure as detailed in the appended claims.

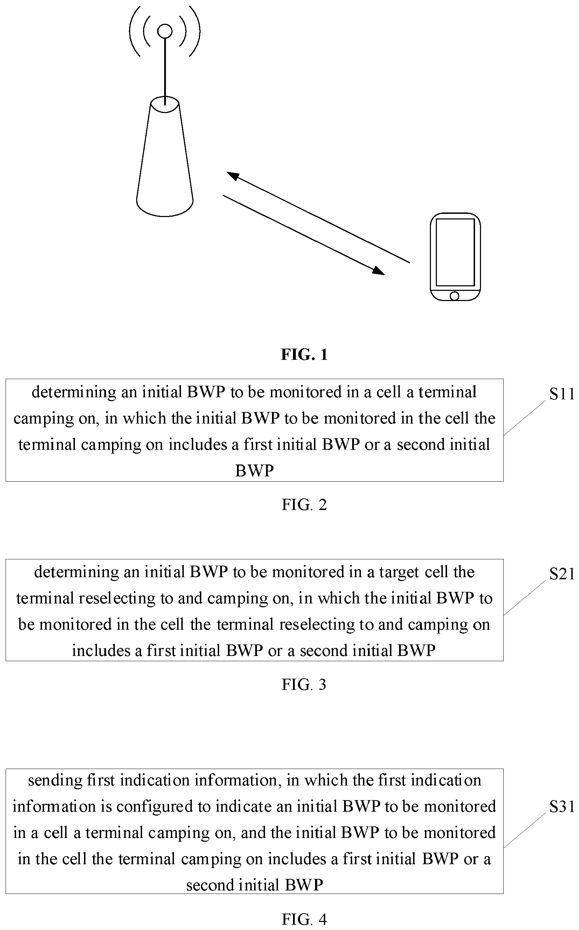

The method for configuring the initial BWP in embodiments of the present disclosure is applicable to a wireless communication system as illustrated in FIG. 1. As illustrated in FIG. 1, the wireless communication system includes a terminal and a network device. The terminal and the network device send and receive information through wireless resources.

It may be understood that, the wireless communication system as illustrated in FIG. 1 is only illustrated, and the wireless communication system further may include other network devices, for example, a core network device, a wireless relay device and a wireless backhaul device not shown in FIG. 1. A number of network devices and a number of terminals included in the wireless communication system are not limited in embodiments of the present disclosure.

It may be further understood that, the wireless communication system in embodiments of the present disclosure is a network that provides a wireless communication function. The wireless communication system may adopt different communication technologies, for example, code division multiple access (CDMA), wideband code division multiple access (WCDMA), time division multiple access (TDMA), frequency division multiple access (FDMA), orthogonal frequency-division multiple access (OFDMA), single Carrier FDMA (SC-FDMA) and carrier sense multiple access with collision avoidance. A network may be divided into a 2G (generation) network, a 3G network, a 4G network or a future evolution network (e.g., 5G network) based on capacities, rates, latencies and other factors of different networks. For example, the 5G network may also be referred to as a new radio (NR) network. For ease of description, a wireless communication network is simply referred to as a network in the disclosure sometimes.

Further, the network device involved in the present disclosure may also be referred to as a radio access network device. The radio access network device may be a base station, an evolved node B (a base station), or a home base station. It may also be an access point (AP), a wireless relay node, a wireless backhaul node, a transmission point (TP), or a transmission and reception point (TRP), etc., in a wireless fidelity (WiFi^{™}) system. It may also be a gNB in an NR system, or a component constituting a base station or a part of the device. The network device may also be a vehicle-mounted device in an Internet of Vehicles (V2X) communication system. It should be understood that, a specific technology and a specific device form adopted by the network device are not limited in the embodiments of the present disclosure.

Further, the terminal involved in the present disclosure may also be referred to as a terminal device, a user equipment (UE), a mobile station (MS), a mobile terminal (MT), etc., as a device that provides voice and/or data connectivity to a user. For example, the terminal may be a handheld device with a wireless connection function or a vehicle device, etc. At present, some examples of the terminal are a mobile phone, a pocket personal computer (PPC), a palm computer, a personal digital assistant (PDA), a notebook computer, a tablet computer, a wearable device, or a vehicle-mounted device. In addition, the terminal device may also be a vehicle-mounted device in an Internet of Vehicles (V2X) communication system. It should be understood that, a specific technology and a specific device form adopted by a terminal are not limited in the embodiments of the present disclosure.

The terminal described in embodiments of the present disclosure may be understood as a new terminal type designed in 5G NR: a low capability terminal. The low capability terminal is also referred to as a Reduced capability UE (Redcap UE) or an NR-lite. In embodiments of the present disclosure, the new terminal is referred to as the Redcap UE.

Similar to an IoT device in long term evolution (LTE), the 5G NR-lite usually needs to satisfy following requirements:
- low cost, low complexity
- coverage enhancement to a certain degree
- power saving

Since the current NR system is designed for a high-level terminal with a high speed and a low latency, the current design may not meet the above requirements of NR-Lite. The current NR system needs to be improved to meet the requirements of NR-Lite. For example, in order to meet the requirements of low cost and low complexity, a radio frequency (RF) bandwidth of the NR-IoT may be limited, for example, limited to 5M Hz or 10M Hz, or a size of a buffer of the NR-Lite may be limited, and a size of a transmission block received each time may be thus limited, etc. For power saving, a possible optimization direction is to simplify a communication process, reduce a number of times where the NR-Lite terminal detects a downlink control channel, etc.

In the related art, in order to support the terminal incapable of processing a whole carrier bandwidth and receiver-bandwidth adaptation, the NR standard defines a BWP. In an NR system, an initial BWP is configured for a terminal in an idle state or an inactive state. When the terminal enters the inactive state from a connected state, the terminal will camp on the initial BWP, and monitor the initial BWP. In the related art, an initial BWP specific to the Redcap UE is also defined for the Redcap UE. That is, two initial BWPs are configured for the Redcap UE. When there are two initial BWPs in the system, the terminal enters an RRC_INACTIVE state or an idle state, from a connected state or an RRC_CONNCETED state, it is a problem how the terminal shall select an initial BWP to be monitored, so as to detect a paging message.

The initial BWP referred in embodiments of the disclosure includes an initial downlink BWP (initial DL BWP) or an initial uplink BWP (initial UL BWP). In embodiments of the present disclosure, it is illustrated by taking the Initial DL BWP as an example.

For example, the initial DL BWP is defined in the NR system. The terminal needs to monitor information such as a synchronization signal and physical block channel (PBCH) block (SSB) on the initial DL BWP and a paging message. Considering factors such as TDD center frequency-alignment of the Redcap UE, an initial DL BWP specific to the Redcap UE is also defined for the Redcap UE in the related art. That is, there are two initial DL BWPs in the network for the Redcap UE. When there are two initial DL BWPs in the system, the terminal enters an inactive state or an idle state from a connected state, how the terminal shall select a monitored initial DL BWP to detect the paging message or measure the SSB.

A method for determining an initial BWP is provided in the embodiments of the disclosure. When there are a plurality of initial BWPs, the terminal determines an initial BWP to be monitored when entering the inactive or the idle state from the connected state.

In embodiments of the present disclosure, for convenience of description, any two different initial BWPs in the plurality of initial BWPs are referred to a first initial BWP and a second initial BWP.

In an implementation, in the method for determining the initial BWP according to the embodiments of the disclosure, when the terminal is configured with the plurality of initial BWPs, and enters the inactive or the idle state from the connected state, it is determined that the initial BWP to be monitored is the first initial BWP or the second initial BWP.

FIG. 2 is a flowchart illustrating a method for determining an initial BWP according to an example embodiment. The method for determining the initial BWP may be executed alone or in combination with other embodiments of the disclosure. As illustrated in FIG. 2, the method for determining the initial BWP is performed by a terminal. The method includes the following steps.

At step S11, an initial BWP to be monitored in a cell the terminal camping on is determined. The initial BWP to be monitored in the cell the terminal camping on includes a first initial BWP or a second initial BWP.

In embodiments of the disclosure, after the initial BWP to be monitored in the cell the terminal camping on is determined, an SSB may be monitored and/or a paging message may be received on the determined initial BWP.

Receiving the paging message may include receiving a physical downlink control channel (PDCCH) or receiving a physical downlink share channel (PDSCH). Monitoring the SSB may be performing an SSB measurement, and determining SSB measurement information.

In embodiments of the disclosure, the plurality of initial BWPs may have different bandwidths, so that terminals applicable to different capability types communicate based on initial BWPs applicable to their own bandwidth capabilities. For example, an initial BWP capable of supporting the bandwidth capability of the Redcap UE may be determined from the plurality of initial BWPs, so that the Redcap UE may communicate in the initial BWP applicable to the Redcap UE.

In the method for determining the initial BWP according to embodiments of the disclosure, different initial BWPs may be configured for different bandwidth capabilities of different types of terminals. The different types of terminals may have different capabilities. For example, the terminal capability may be a transceiving bandwidth, a number of transceiving antennas, a maximum bit number of a transmission block, a processing delay or the like. The capability of the terminal may be different in one or more of the transceiving bandwidth, the number of transceiving antennas, the maximum bit number of the transmission block or the processing delay.

In embodiments of the present disclosure, for convenience of description, any two of different types of terminals are referred to a first-type terminal and a second-type terminal.

In embodiments of the present disclosure, the first-type terminal and the second-type terminal may possess different capabilities. For example, the terminal capability may be a transceiving bandwidth, a number of transceiving antennas, a maximum bit number of a transmission block, a processing delay or the like. The capability of the terminal may be different in one or more of the transceiving bandwidth, the number of transceiving antennas, the maximum bit number of the transmission block or the processing delay.

In an embodiment, the first initial BWP belongs to a bandwidth capability range of the first-type terminal, and the second initial BWP belongs to a bandwidth capability range of the second-type terminal. The capability of the first-type terminal is greater than the capability of the second-type terminal.

In embodiments of the disclosure, the first initial BWP belonging to the bandwidth capability range of the first-type terminal may be understood as a common initial BWP. The second initial BWP belonging to the bandwidth capability range of the second-type terminal may be understood as an initial BWP specific to the second-type terminal.

For example, in an example, the first-type terminal may be a common terminal (a non-Redcap UE), and the second-type terminal may be a Redcap UE (i.e., a reduced capability UE). Compared with the Redcap UE, for example, the common terminal may be a UE supporting NR. The Redcap UE may be configured with at least one first initial BWP and at least one second initial BWP. When the Redcap UE enters the inactive state or the idle state from the connected state, the Redcap UE may select to monitor the first initial BWP or select to monitor the second initial BWP.

In an implementation, the terminal in embodiments of the present disclosure may determine the initial BWP to be monitored in the cell the terminal camping on in at least one of following manners.

In a first manner, it is determined that the initial BWP to be monitored in the cell the terminal camping on is the first initial BWP.

In an example, it is determined according to a protocol that the initial BWP to be monitored in the cell the terminal camping on is the first initial BWP when the terminal enters the inactive state from the connected state. That is, it is determined based on a protocol that the first initial BWP is always monitored in the cell the terminal camping on, when the terminal enters the inactive state from the connected state.

In a second manner, it is determined that the initial BWP to be monitored in the cell the terminal camping on is the second initial BWP.

In an example, according to a protocol, the initial BWP to be monitored in the cell the terminal camping on is the second initial BWP when the terminal enters the inactive state from the connected state. The network configures the second initial BWP, and the second initial BWP is configured with one or more of a SSB and paging information. That is, it is determined based on a protocol that the initial BWP to be monitored in the cell the terminal camping on is the second initial BWP.

In a third manner, it is determined based on a network configuration, the initial BWP to be monitored in the cell the terminal camping on.

In embodiments of the disclosure, the network device may indicate, based on indication information, which initial BWP the terminal switches to when entering the inactive state from the connected state. For example, before the terminal performs an RRC connection release or is in a process of performing the RRC connection release, the network device sends first indication information indicating which initial BWP the terminal needs to switch to.

The indication information for indicating the initial BWP to be monitored in the cell the terminal camping on is referred to as first indication information.

In an aspect, the first indication information may indicate the first initial BWP is to be monitored in the cell the terminal camping on when the terminal enters the inactive state from the connected state. The terminal receives first indication information from the network device, and determines the first initial BWP is to be monitored in the cell the terminal camping on based on the first indication information. In another aspect, the first indication information may indicate the second initial BWP is to be monitored in the cell the terminal camping on when the terminal enters the inactive state from the connected state. The terminal receives first indication information from the network device; and determines the second BWP is to be monitored in the cell the terminal camping on based on the first indication information.

In an example, the first indication information may be signaling indication information, for example, an RRC release signaling indication.

In a fourth manner, the initial BWP to be monitored in the cell the terminal camping on is determined based on a predefined rule.

The predefined condition, on one hand, may include a condition that the initial BWP to be monitored in the cell the terminal camping on is the first initial BWP, and on the other hand, may include a condition that the initial BWP to be monitored in the cell the terminal camping on is the second initial BWP.

In an example, the predefined condition includes the condition that the initial BWP to be monitored in the cell the terminal camping on is the second initial BWP. The condition that the initial BWP to be monitored in the cell the terminal camping on is the second initial BWP includes: the second initial BWP being configured with one or more parameters of the SSB, the paging message, system information and a random access channel (RACH). In one aspect, when the terminal determines the condition that the initial BWP to be monitored in the cell the terminal camping on is the second initial BWP is satisfied, the initial BWP to be monitored in the cell the terminal camping on is the second initial BWP. Alternatively, in another aspect, when the terminal determines the condition that the initial BWP to be monitored in the cell the terminal camping on is the second initial BWP is not satisfied, the initial BWP to be monitored in the cell the terminal camping on is the first initial BWP.

In embodiments of the disclosure, it is determined based on the predefined condition that the initial BWP to be monitored in the cell the terminal camping on may be understood as an implicit manner of determining the initial BWP to be monitored in the cell the terminal camping on. For example, the initial BWP to be monitored in the cell the terminal camping on is determined in the implicit manner when the terminal enters the inactive state from the connected state. For example, when the network device configures parameters required by one or more procedures such as the SSB, the paging, system message receiving and the RACH procedure for the second initial BWP, the terminal determines the initial BWP to be monitored in the cell the terminal camping on is the second initial BWP. Otherwise, the terminal determines the initial BWP to be monitored in the cell the terminal camping on is the first initial BWP.

In embodiments of the disclosure, when the terminal is configured with the first initial BWP and the second initial BWP, when the terminal enters the inactive state from the connected state, the initial BWP to be monitored in the cell the terminal camping on may be determined in any one implementation of the first manner, the second manner, the third manner and the fourth manner.

In embodiments of the disclosure, the terminal may monitor an SSB or receive a paging message on the initial BWP to be monitored after determining the initial BWP to be monitored in the cell the terminal camping on.

In the method for determining the initial BWP according to embodiments of the disclosure, the terminal may perform a cell reselection to determine a target reselection cell, and determine an initial BWP to be monitored in the target cell the terminal reselecting to and camping on.

FIG. 3 is a flowchart illustrating a method for determining an initial BWP according to an example embodiment. The method for determining the initial BWP may be executed alone or in combination with other embodiments of the disclosure. As illustrated in FIG. 3, the method for determining the BWP is performed by a terminal. The method includes the following steps.

At step S21, an initial BWP to be monitored in a target cell the terminal reselecting to and camping on is determined. The initial BWP includes a first initial BWP or a second initial BWP.

In embodiments of the disclosure, in response to the terminal performing a cell reselection, the initial BWP to be monitored in the target cell the terminal reselecting to and camping on may be determined.

In embodiments of the disclosure, the initial BWP to be monitored in the target cell the terminal reselecting to and camping on may be determined in different manners based on the manner of determining the initial BWP to be monitored in the cell the terminal camping on.

In an implementation, it is determined based on a first manner that the initial BWP to be monitored in the cell the terminal camping on is always the first initial BWP. In response to the terminal performing a cell reselection, it is determined the initial BWP to be monitored in the target cell the terminal reselecting to and camping on is the first initial BWP.

In another implementation, when the initial BWP to be monitored in the cell the terminal camping on is determined based on the second manner, the third manner or the fourth manner, in an aspect, after the terminal performs a cell reselection, the terminal may read a system information block (SIB) in the first initial BWP of the target cell the terminal camping on, and determine an initial BWP to be monitored in the target cell the terminal reselecting to and camping on based on the SIB in the first initial BWP of the target cell the terminal camping on. In another aspect, after the terminal performs a cell reselection, the terminal may determine an initial BWP to be monitored in the target cell the terminal reselecting to and camping on based on the indication information from the network device. The indication information from the network device for indicating the initial BWP to be monitored in the cell the terminal camping on is referred to as second indication information. The terminal receives the second indication information from the network device, and determines the initial BWP to be monitored in the target cell the terminal reselecting to and camping on based on the second indication information.

In an embodiment, when the terminal reads the SIB in the first initial BWP of the target cell the terminal camping on, and determines the initial BWP to be monitored in the target cell the terminal reselecting to and camping on based on the SIB in the first initial BWP of the target cell the terminal camping on, the SIB is acquired on the first initial BWP of the target cell the terminal camping on. When the SIB indicates the target reselection cell is configured with the second initial BWP, it is determined that the initial BWP to be monitored in the target cell the terminal camping on is the second initial BWP. In another embodiment, the terminal acquires the SIB on the first initial BWP of the target cell the terminal camping on. When the SIB indicates the target reselection cell is not configured with the second initial BWP, it is determined that the initial BWP to be monitored in the target cell the terminal reselecting to and camping on is the first initial BWP.

In another embodiment, the terminal receives the second indication information from the network device, and determines the initial BWP to be monitored in the target cell the terminal reselecting to and camping on based on the second indication information. In an aspect, the second indication information may indicate the initial BWP to be monitored in the target cell the terminal reselecting to and camping on is the first initial BWP. The terminal receives the second indication information from the network device, and determines the first initial BWP is to be monitored in the target cell the terminal reselecting to and camping on based on the second indication information. In another aspect, the first indication information may indicate the initial BWP to be monitored in the target cell the terminal reselecting to and camping on is the second initial BWP. The terminal receives the second indication information from the network device, and determines the second initial BWP is to be monitored in the target cell the terminal reselecting to and camping on based on the second indication information.

In the method for determining the initial BWP according to embodiments of the disclosure, the initial BWP to be monitored is determined when the plurality of initial BWPs are configured, and SSB measurement and/or reception of the paging message are performed on the determined initial BWP.

In an example, the method for determining the initial BWP referred in the above embodiment is illustrated by taking the terminal being a Redcap UE, the first initial BWP being a common first initial DL BWP, and the second initial BWP being a second initial DL BWP specific to the Redcap UE as an example. That is, the first initial DL BWP is an initial BWP that needs to be monitored by a non-Redcap UE in a wireless communication system (for example, an NR communication system). The second initial DL BWP is an initial DL BWP that needs to be monitored by the Redcap UE. When there are the plurality of initial DL BWPs, the Redcap UE may determine the initial DL BWP that needs to be monitored in the following methods.

In a first method,
the Redcap UE always switches to (sometimes referred to as camps on) an original first initial DL BWP, that is, monitors the SSB and/or receives the paging message on the first initial DL BWP.

The terminal only camps on the first initial DL BWP when performing a cell reselection.

In a second method,
the Redcap UE always switches to the second initial DL BWP, in which case an SSB and/or a paging CSS is configured on the second initial DL BWP.

In response to the RedCap UE performing a cell reselection, a SIB in the first initial DL BWP needs to be read first. If the reselection cell is configured with the second initial DL BWP, the Redcap UE needs to camp on the second initial DL BWP of the reselection cell or decides to camp on the second initial DL BWP or the first initial DL BWP based on an indication of the network.

In a third method,
based on a network configuration, when the terminal is in a process of performing an RRC connection release, before or after the terminal performs the RRC connection release, the network indicates which initial DL BWP the terminal needs to switch to.

In response to the terminal performing a cell reselection, a SIB in the first initial DL BWP needs to be read first. If the reselection cell is configured with the second initial DL BWP, the terminal decides whether to camp on the second first initial DL BWP based on an indication of the network.

In a four method,
which initial DL BWP the terminal needs to switch to is determined based on a predefined rule. For example, if the second initial DL BWP is configured with the SSB and the paging, the terminal switches to the second initial DL BWP, and if not, the terminal switches to the first initial DL BWP.

In response to the terminal performing a cell reselection, the SIB in the first initial DL BWP needs to be read first. If the reselection cell is configured with the second initial DL BWP, the terminal decides whether to camp on the second first initial DL BWP based on an indication of the network.

In the method for determining the initial BWP according to embodiments of the disclosure, the terminal determines the initial BWP to be monitored in the cell the terminal camping on or and/or the initial BWP to be monitored in the target cell the terminal camping on, when configuring the plurality of initial BWPs, and the SSB measurement and/or reception of the paging message are performed on the determined initial BWP.

Based on the same concept, a method for determining an initial BWP is further according to embodiments of the disclosure, which is performed by a network device.

FIG. 4 is a flowchart illustrating a method for determining an initial BWP according to an example embodiment. The method for determining the initial BWP may be executed alone or in combination with other embodiments of the disclosure. As illustrated in FIG. 4, the method for determining the initial BWP is performed by the network device. The method includes following steps.

At step S31, first indication information is sent. The first indication information is configured to indicate an initial BWP to be monitored in a cell a terminal camping on. The initial BWP to be monitored in the cell the terminal camping on includes a first initial BWP or a second initial BWP.

In an embodiment, the first initial BWP belongs to a bandwidth capability range of a first-type terminal, and the second initial BWP belongs to a bandwidth capability range of a second-type terminal. The capability of the first-type terminal is greater than the capability of the second-type terminal.

In embodiments of the disclosure, the first initial BWP belonging to the bandwidth capability range of the first-type terminal may be understood as a common initial BWP. The second initial BWP belonging to the bandwidth capability range of the second-type terminal may be understood as an initial BWP specific to the second-type terminal.

In an implementation, the network device may further send second indication information. The second indication information is configured to indicate an initial BWP to be monitored in a target cell the terminal camping on.

In an aspect, the first indication information may indicate the first initial BWP is to be monitored in the cell the terminal camping on when the terminal enters the inactive state from the connected state. In another aspect, the first indication information may indicate the second initial BWP is to be monitored in the cell the terminal camping on when the terminal enters the inactive state from the connected state.

In an example, the first indication information may be signaling indication information, for example, an RRC release signaling indication.

It may be understood that, the method for determining the initial BWP performed by the network device in embodiments of the disclosure corresponds to the method for determining the initial BWP performed by the terminal in the above embodiments. Therefore, the description of the method for determining the initial BWP performed by the network device may refer to the corresponding description of the method for determining the initial BWP performed by the terminal, which is not repeated here.

It may be further understood that, the method for determining the initial BWP according to embodiments of the disclosure is applicable to a scenario where an interaction between the terminal and the network device achieves BWP switching. Functions achieved by the terminal and the network device in the implementation process may refer to descriptions of the above embodiments, which will not be described.

It needs to be noted that, those skilled in the art may understand that various implementations/embodiments involved in the embodiments of the present disclosure may be used in combination with the above embodiments, and may be independently used. Whether independently used or used in combination with the above embodiments, the implementation principle is similar. In the embodiments of the present disclosure, some of the embodiments are illustrated by the implementations used together. It may be understood by those skilled in the art that the examples are not a limitation of embodiments of the present disclosure.

Based on the same conception, an apparatus for determining an initial BWP is further provided in embodiments of the present disclosure.

It may be understood that, the apparatus for determining the initial BWP according to embodiments of the present disclosure includes hardware structures and/or software modules that perform corresponding functions in order to achieve the above functions. In combination with the modules and algorithm steps in each example described in embodiments of the present disclosure, the embodiments of the present disclosure may be implemented in the form of a hardware or a combination of a hardware and a computer software. Whether a certain function is executed by a hardware or a computer software driving a hardware depends on specific applications and design constraints of the technical solution. Those skilled in the art may adopt different methods for each specific application to implement the described functions, but such implementation should not be considered as beyond the scope of the technical solutions in embodiments of the present disclosure.

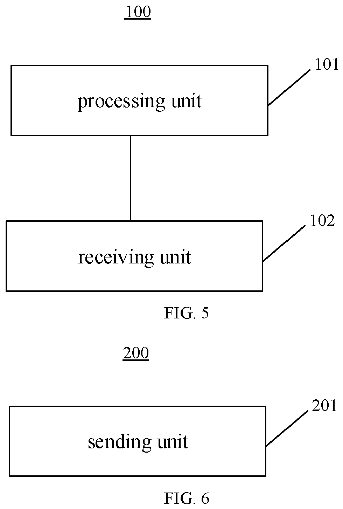

FIG. 5 is a block diagram illustrating an apparatus for determining an initial BWP according to an example embodiment. As illustrated in FIG. 5, the apparatus 100 for determining the initial BWP is applicable to a terminal, and includes a processing unit 101.

The processing unit 101 is configured to determine an initial BWP to be monitored in a cell the terminal camping on. The initial BWP to be monitored in the cell the terminal camping on includes a first initial BWP or a second initial BWP.

In an embodiment, the first initial BWP belongs to a bandwidth capability range of a first-type terminal, and the second initial BWP belongs to a bandwidth capability range of a second-type terminal. The capability of the first-type terminal is greater than the capability of the second-type terminal.

In an implementation, the network configures a second initial BWP. The processing unit 101 is configured to determine the initial BWP to be monitored in the cell the terminal camping on is the second initial BWP. The second initial BWP is configured with one or more of a SSB and paging information.

In an implementation, the apparatus 100 for determining the initial BWP further includes a receiving unit 102. The receiving unit 102 is configured to receive first indication information from a network device. The processing unit 101 is configured to determine an initial BWP to be monitored in a cell a terminal camping on based on the first indication information.

In an implementation, the processing unit 101 is configured to determine the initial BWP to be monitored in the cell the terminal camping on based on a predefined rule.

In an implementation, the processing unit 101 is further configured to determine an initial BWP to be monitored in a target cell the terminal reselecting to and camping on. The initial BWP includes a first initial BWP or a second initial BWP.

In an implementation, the apparatus 100 for determining the initial BWP further includes a receiving unit 102. The receiving unit 102 is configured to acquire an SIB on the first initial BWP of the target cell the terminal camping on. In response to the target reselection cell is configured with the second initial BWP, the processing unit 101 is configured to determine that the initial BWP to be monitored in the target cell the terminal reselecting to and camping on is the second initial BWP.

In an implementation, the apparatus 100 for determining the initial BWP further includes a receiving unit 102. The receiving unit 102 is configured to acquire an SIB on the first initial BWP of the target cell the terminal camping on. In response to the SIB indicating the target reselection cell is not configured with the second initial BWP, the processing unit 101 is configured to determine that the initial BWP to be monitored in the target cell the terminal reselecting to and camping on is the first initial BWP.

In an implementation, the apparatus 100 for determining the initial BWP further includes a receiving unit 102. The receiving unit 102 is configured to receive second indication information from a network device. The processing unit 101 is configured to determine an initial BWP to be monitored in a target cell the terminal reselecting to and camping on based on the second indication information.

In an implementation, the processing unit 101 is configured to determine the initial BWP to be monitored in the cell the terminal camping on is a first initial BWP.

In an implementation, the processing unit 101 is further configured to determine the initial BWP to be monitored in a target cell the terminal reselecting to and camping on is a first initial BWP.

In an implementation, the processing unit 101 is further configured to perform a SSB measurement on the initial BWP to be monitored and/or receive a paging message on the initial BWP to be monitored.

FIG. 6 is a block diagram illustrating an apparatus for determining an initial BWP according to an example embodiment. As illustrated in FIG. 6, an apparatus 200 for determining an initial BWP is applicable to a network device, and includes a sending unit 201.

The sending unit 201 is configured to send first indication information. The first indication information is configured to indicate an initial BWP to be monitored in a cell a terminal camping on. The initial BWP to be monitored in the cell the terminal camping on includes a first initial BWP or a second initial BWP.

The first initial BWP belongs to a bandwidth capability range of a first-type terminal, and the second initial BWP belongs to a bandwidth capability range of a second-type terminal. The capability of the first-type terminal is greater than the capability of the second-type terminal.

In an implementation, the sending unit is 201 further configured to send second indication information. The second indication information is configured to indicate an initial BWP to be monitored in a target cell the terminal camping on.

With regards to the apparatus in the above embodiments, the specific way in which each module performs the operation has been described in embodiments of the method and will not be elaborated here.

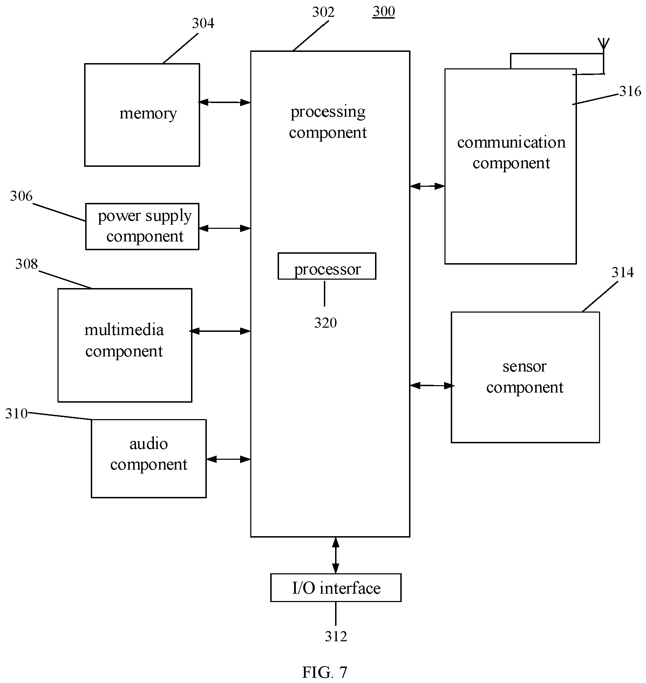

FIG. 7 is a block diagram illustrating a device for determining an initial BWP according to an example embodiment. The device 300 for determining the initial BWP may be provided as a terminal involved in the above embodiments. For example, the device 300 may be a mobile phone, a computer, a digital broadcasting terminal, a messaging device, a game console, a tablet device, a medical equipment, a fitness equipment, a personal digital assistant, etc.

As illustrated in FIG. 7, the device 300 may include one or more components: a processing component 302, a memory 304, a power supply component 306, a multimedia component 308, an audio component 310, an input/output (I/O) interface 312, a sensor component 314, and a communication component 316.

The processing component 302 generally controls overall operations of the device 300, such as operations associated with display, phone calls, data communications, camera operations and recording operations. The processing component 302 may include one or more processors 320 to perform instructions, to complete all or part of the steps of the above method. In addition, the processing component 302 may include one or more modules for the convenience of interaction between the processing component 302 and other components. For example, the processing component 302 may include a multimedia module to facilitate interaction between the multimedia component 308 and the processing component 302.

The memory 304 is configured to store various types of data to support operations at the device 300. Examples of such data include instructions for any application program or any method operating on the device 300, contact data, phonebook data, messages, pictures, videos, etc. The memory 304 may be implemented by any type of volatile or non-volatile storage device, or their combination, such as a Static Random Access Memory (SRAM), an Electrically Erasable Programmable Read-Only Memory (EEPROM), an Erasable Programmable Read-Only Memory (EEPROM), a Programmable Read-Only Memory (EPROM), a Programmable Read-Only Memory (PROM), a Read-Only Memory (ROM), a magnetic memory, a flash memory, a magnetic or an optical disk.

The power component 306 provides power to the various components of device 300. The power component 306 may include a power management system, one or more power supplies, and other components associated with generating, managing, and distributing powers to the device 300.

The multimedia component 308 includes a screen that provides an output interface between the device 300 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or slide action, but also detect a duration and a pressure associated with the touch or slide action. In some embodiments, the multimedia component 308 includes a front-facing camera and/or a rear-facing camera. When the device 300 is in an operating mode, such as a shooting mode or a video mode, the front camera and/or the rear camera may receive external multimedia data. Each of the front-facing camera and the rear-facing camera may be a fixed optical lens system or have a focal length and optical zoom capabilities.

The audio component 310 is configured to output and/or input audio signals. For example, the audio component 310 includes a microphone (MIC) configured to receive external audio signals when the device 300 is in an operating mode, such as a call mode, a recording mode, and a speech recognition mode. The received audio signals may be further stored in the memory 304 or sent via the communication component 316. In some embodiments, the audio component 310 also includes a speaker for outputting audio signals.

The I/O interface 312 provides an interface between the processing component 302 and a peripheral interface module, which may be a keyboard, a click wheel, a button, etc. These buttons may include, but are not limited to: a home button, volume buttons, a start button, and a lock button.

The sensor component 314 includes one or more sensors for providing various aspects of status assessment for the device 300. For example, the sensor component 314 may detect an on/off state of the device 300, a relative positioning of components such as a display and a keypad of the device 300, and the sensor component 314 may also detect a position change of the device 300 or a component of the device 300, a presence or absence of a user contact with the device 300, an orientation or acceleration/deceleration of the device 300 and a temperature change of the device 300. The sensor component 314 may include a proximity sensor configured to detect the presence of nearby objects without any physical contact. The sensor component 314 may also include a light sensor, such as a Complementary Metal-Oxide-Semiconductor (CMOS) or Charge Coupled Device (CCD) image sensor, for use in imaging applications. In some embodiments, the sensor component 314 may also include an acceleration sensor, a gyroscope sensor, a magnetic sensor, a pressure sensor, or a temperature sensor.

The communication component 316 is configured to facilitate wired or wireless communication between the device 300 and other devices. The device 300 may access a wireless network based on a communication standard, such as WiFi^{™}, 2G or 3G, or their combination. In an example embodiment, the communication component 316 receives broadcast signals or broadcast related information from an external broadcast management system via a broadcast channel. In an example embodiment, the communication component 316 also includes a near field communication (NFC) module to facilitate short-range communications. For example, the NFC module can be implemented based on Radio Frequency Identification (RFID) technology, Infrared Data Association (IrDA) technology, Ultra-Wideband (UWB) technology, Bluetooth (BT) technology and other technologies.

In an example embodiment, the device 300 may be implemented by one or more Application Specific Integrated Circuits (ASICs), Digital Signal Processors (DSPs), Digital Signal Processing Devices (DSPDs), Programmable Logic Devices (PLDs), a Field Programmable Gate Array (FPGA), a controller, a microcontroller, a microprocessor or other electronic components, for executing the above method.

In an example embodiment, a storage medium including instructions is also provided, such as the memory 304 including instructions, which may be executed by the processor 320 of the device 300 to complete the above method. For example, the non-transitory computer-readable storage medium may be a ROM, a random access memory (RAM), a CD-ROM, a magnetic tape, a floppy disk, an optical a data storage device, etc.

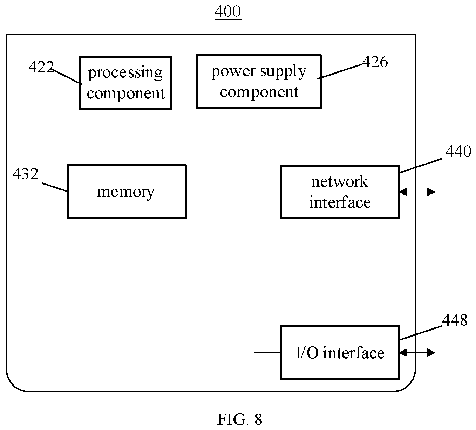

FIG. 8 is a block diagram illustrating a device for determining an Initial BWP according to an example embodiment. For example, the device 400 for determining an Initial BWP may be provided as a network device. Referring to FIG. 8, the device 400 includes a processing component 422, which further includes one or more processors, and memory resources represented by a memory 432 for storing instructions, such as application programs, executable by the processing component 422. The application program stored in the memory 432 may include one or more modules, each of which corresponds to a set of instructions. Furthermore, the processing component 422 is configured to execute instructions to perform the above methods.

The device 400 may also include a power supply component 426 configured to perform power management of the device 400, a wired or wireless network interface 440 configured to connect the device 400 to a network, and an input-output (I/O) interface 448. The device 400 may operate based on an operating system stored in the memory 432, such as Windows Server^{™}, Mac OS X^{™}, Unix^{™}, Linux^{™}, FreeBSD^{™} or the like.

In an example embodiment, a storage medium including instructions is also provided, such as the memory 432 including instructions executable by the processing component 422 of the device 400 to complete the above method. For example, the non-transitory computer-readable storage medium may be a ROM, a random access memory (RAM), a CD-ROM, a magnetic tape, a floppy disk, an optical data storage device, etc.

It may be further understood that "a plurality of" in the disclosure refers to two or more than two, and other quantifiers are similar. "And/or" describes a relationship between related objects, indicating that there may be three relationships. For example, A and/or B may mean: A exists alone, A and B exist simultaneously, and B exists alone. The character "/" generally indicates that the related objects are in an "or" relationship. The singular forms "a", "an" and "the" are intended to include the plural forms as well, unless the context clearly indicates otherwise.

It is further understood that the terms "first", "second", etc. are used to describe various information, but such information should not be limited to these terms. These terms are only used to distinguish information of the same type from each other and do not imply a specific order or importance. In fact, the expressions such as "first" and "second" may be used interchangeably. For example, without departing from the scope of the disclosure, first information may also be called second information, and similarly, second information may also be called first information.

It will be further understood that although the operations are described in a specific order in the drawings in the embodiments of the disclosure, it should not be understood as requiring that these operations are performed in a specific order as shown or in a serial order, or all the operations shown are performed to obtain a desired result. In certain circumstances, multitasking and parallel processing may be advantageous.

Other embodiments of the disclosure may be readily apparent to those skilled in the art from consideration of the specification and practice of the invention disclosed herein. The invention is intended to cover any variations, uses, or adaptations of the disclosure that follow the general principles of the disclosure and include common knowledge or conventional technical means in the technical field that are not disclosed herein. It is intended that the specification and examples be considered as exemplary only, with a true scope and spirit of the disclosure being indicated by the following claims.

It is to be understood that the disclosure is not limited to the precise structures described above and illustrated in the accompanying drawings, various modifications and changes may be made without departing from the scope of the disclosure. The scope of the disclosure is limited only by the appended claims.

## Claims

1. A method for determining an initial bandwidth part (BWP), performed by a terminal, the method comprising:
determining an initial BWP to be monitored in a cell the terminal camping on, wherein the initial BWP comprises a first initial BWP or a second initial BWP.

2. The method according to claim 1, wherein determining the initial BWP to be monitored in the cell the terminal camping on comprises:
in response to a network configuring the second initial BWP, determining the initial BWP to be monitored in the cell the terminal camping on is the second initial BWP, wherein the second initial BWP is configured with one or more of a synchronization signal and PBCH block (SSB) and paging information.

3. The method according to claim 1, wherein determining the initial BWP to be monitored in the cell the terminal camping on comprises:
receiving first indication information from a network device; and
determining the initial BWP to be monitored in the cell the terminal camping on based on the first indication information.

4. The method according to claim 1, wherein determining the initial BWP to be monitored in the cell the terminal camping on comprises:
determining the initial BWP to be monitored in the cell the terminal camping on based on a predefined rule.

5. The method according to any one of claims 1 to 4, further comprising:
determining an initial BWP to be monitored in a target cell the terminal reselecting to and camping on, wherein the initial BWP comprises a first initial BWP or a second initial BWP.

6. The method according to claim 5, wherein determining the initial BWP to monitored in the target cell the terminal reselecting to and camping on comprises:
acquiring a system information block (SIB) on the first initial BWP in the target cell; and
in response to the SIB indicating the target cell is configured with the second initial BWP, determining the initial BWP to be monitored in the target cell the terminal reselecting to and camping on is the second initial BWP.

7. The method according to claim 5, wherein determining the initial BWP to be monitored in the target cell the terminal reselecting to and camping on comprises:
acquiring a system information block (SIB) on the first initial BWP in the target cell; and
in response to the SIB indicating the target cell is not configured with the second initial BWP, determining the initial BWP to be monitored in the target cell the terminal reselecting to and camping on is the first initial BWP.

8. The method according to claim 5, wherein determining the initial BWP to be monitored in the target cell the terminal reselecting to and camping on comprises:
receiving second indication information from a network device; and
determining the initial BWP to be monitored in the target cell the terminal reselecting to and camping on based on the second indication information.

9. The method according to claim 1, wherein determining the initial BWP to be monitored in the cell the terminal camping on comprises:
determining the initial BWP to be monitored in the cell the terminal camping on is the first initial BWP.

10. The method according to claim 9, further comprising:
determining an initial BWP to be monitored in a target cell the terminal reselecting to and camping on is the first initial BWP.

11. The method according to any one of claims 1 to 10, further comprising:
performing a synchronization signal and PBCH block (SSB) measurement on the initial BWP to be monitored and/or receiving a paging message on the initial BWP to be monitored.

12. A method for determining an initial bandwidth part (BWP), performed by a network device, the method comprising:
sending first indication information, wherein the first indication information indicates an initial BWP to be monitored in a cell a terminal camping on, wherein the initial BWP comprises a first initial BWP or a second initial BWP.

13. The method according to claim 12, further comprising:
sending second indication information, wherein the second indication information indicates an initial BWP to be monitored in a target cell the terminal camping on.

14. An apparatus for determining an initial bandwidth part (BWP), comprising:
a processing unit, configured to determine an initial BWP to be monitored in a cell a terminal camping on, wherein the initial BWP comprises a first initial BWP or a second initial BWP.

15. An apparatus for determining an initial bandwidth part (BWP), comprising:
a sending unit, configured to send first indication information, wherein the first indication information indicates an initial BWP to be monitored in a cell a terminal camping on, wherein the initial BWP comprises a first initial BWP or a second initial BWP.

16. A device for determining an initial bandwidth part (BWP), comprising:
a processor; and
a memory for storing processor executable instructions;
wherein the processor is configured to perform the method according to any one of claims 1 to 11.

17. A device for determining an initial bandwidth part (BWP), comprising:
a processor; and
a memory for storing processor executable instructions;
wherein the processor is configured to perform the method according to any one of claims 12 to 13.

18. A storage medium storing instructions, wherein when the instructions in the storage medium are executed by a processor of a terminal, the terminal is caused to perform the method according to any one of claims 1 to 11.

19. A storage medium storing instructions, wherein when the instructions in the storage medium are executed by a processor of a network device, the network device is caused to perform the method according to any one of claims 12 to 13.
